# EUROPEAN PATENT APPLICATION

(11) **EP 4 715 269 A1**
(43) Date of publication of application: **25.03.2026**
(21) Application number: 25202443.5
(22) Date of filing: 16.09.2025
(51) Int. Cl.: F24C 15/20

(54) **A PORTABLE RANGE HOOD**

(30) Priority: 19.09.2024 CN 202411309217
(71) Applicant: Smart Product Concepts Limited, Kwun Tong (HK)
(72) Inventor: Junker, Lars, Hong Kong (CN); Fung, Mark, Hong Kong (CN); Stangenberg, Sebastian, Hong Kong (CN)
(74) Representative: Raffay & Fleck

(57) **Abstract**

The present invention discloses a portable range hood comprising a barrel-shaped master body, a fan assembly, a first filtration device, and a detachable second filtration device. The body has an air inlet at one end and an air outlet at the other, with a first connection device arranged at the outlet. The fan assembly inside the master body is configured to draw oil fume through the inlet and discharge it through the outlet. The first filtration device is fixed at the inlet, while the second filtration device is mounted at the outlet and provided with a second connection device that mates with the first connection device to enable detachable connection. The detachable second filtration device allows users to flexibly adjust filtration and purification capacity and permits quick replacement without hand contact with oily filters, thereby making the portable range hood simple, convenient, and comfortable to use.

## Description

### Cross-reference to Related Applications:

The present application claims priority from the China Patent Application No. 202411309217.0 filed 19 September 2024, and the disclosure of which is incorporated herein by reference in its entirety.

### Field of the Invention:

The present invention relates to the field of range hood technology, and more particularly to a portable range hood.

### Background of the Invention:

Portable range hoods are increasingly popular in scenarios such as outdoor barbecues, camping, and temporary cooking arrangements due to their portability and ease of use. However, existing portable range hoods typically include only a fixed filtration device positioned on one side of the fan assembly. This configuration prevents users from adjusting the overall filtration capacity as needed. In addition, replacement of the filtration device is inconvenient and often results in the user's hands becoming stained with oil. Such designs offer poor usability, high pollution risk, and an unsatisfactory user experience.

Accordingly, improvements in portable range hood technology are required.

### Summary of the Invention:

To overcome above-said shortcomings of prior arts, the present invention provides a portable range hood that allows users to adjust the filtration capacity according to different cooking environments, while simplifying replacement of the filtration device and reducing contamination.

The technical solution of the present invention is as follows:
The present invention discloses a portable range hood comprising:
a master body having a barrel structure with openings at both ends, one opening forming an air inlet of the portable range hood, and the other opening forming an air outlet of the portable range hood, wherein a first connection device is provided at the air outlet;
a fan assembly arranged inside the master body and configured to draw oil fume from outside of the portable range hood through the air inlet and discharge the oil fume through the air outlet;
a first filtration device fixed at the air inlet; and
a second filtration device arranged at the air outlet, the second filtration device is provided with a second connection device on a side of the second filtration device facing the master body, and the second connection device is engaged with the first connection device to achieve detachable connection between the second filtration device and the master body.

In one embodiment, the second filtration device comprises:
a main body having a ring-shaped structure, and the second connection device being arranged at a side of the main body facing the master body; and
a filter detachably arranged in a central position of the main body.
In one embodiment, the second filtration device further comprises:
a filter mounting sleeve having a ring-shaped structure and having a pair of ring-shaped snapping protrusions positioned at opposite ends of the filter mounting sleeve, each of the ring-shaped snapping protrusions extending radially towards center of the filter mounting sleeve for securing the filter inside the filter mounting sleeve; and outer diameter of the filter mounting sleeve matches with inner diameter of the main body to allow the filter mounting sleeve to be accommodated inside the main body.

In one embodiment, the filter mounting sleeve further comprises snap-holding members extending outward radially from an outside surface of the filter mounting sleeve to achieve a snap-hold connection between the filter mounting sleeve and the main body.

In one embodiment, the filter mounting sleeve further comprises pulling handles extending along an axial direction and configured to facilitate installation/uninstallation of the filter mounting sleeve to/from the main body.

In one embodiment, the main body comprises:
a gripping handle arranged on a side of the main body away from the body to facilitate installation/uninstallation of the second filtration device to/from the main body;
snapping slots configured to engaged with the snap-holding members of the filter mounting sleeve to achieve snap-hold connection between the filter mounting sleeve and the main body;
a snapping cover arranged on one side of the main body and connected with the main body in a snap-hold manner; and
a baffle arranged on another side of the main body opposite to the snapping cover and configured to cooperate with the snapping cover to accommodate the filter mounting sleeve inside the main body.

In one embodiment, the snapping cover is further provided with a clearance portion to allow the second connection device to reach out and cooperate with the first connection device to achieve detachable connection between the second filtration device and the body when the snapping cover is arranged at the side of the main body facing the master body.

In one embodiment, the second filtration device further comprises:
a filter cover configured to engage with the main body to fix the filter in a central position of the main body and provided with a filter grid facing the filter to allow oil fume to pass through, and mesh density of the filter grid being smaller than mesh density of a grid at the air outlet of the master body.

In one embodiment, the portable range hood further comprises:
a third filtration device detachably arranged between the first filtration device and the fan assembly.

In one embodiment, the second connection device is a magnet and the first connection device is an iron plate, and the detachable connection between the second filtration device and the body is achieved by magnetic attraction.

In summary, the present invention discloses a portable range hood comprising a master body having a barrel structure with openings at both ends, one opening forming an air inlet of the portable range hood, and the other opening forming an air outlet of the portable range hood, wherein a first connection device is provided at the air outlet; a fan assembly arranged inside the master body and configured to draw oil fume from outside of the portable range hood through the air inlet and discharge the oil fume through the air outlet; a first filtration device fixed at the air inlet; and a second filtration device arranged at the air outlet, the second filtration device is provided with a second connection device on a side of the second filtration device facing the master body, and the second connection device is engaged with the first connection device to achieve detachable connection between the second filtration device and the master body. The detachable second filtration device allows users to flexibly adjust filtration and purification capacity and permits quick replacement without hand contact with oily filters, thereby making the portable range hood simple, convenient, and comfortable to use.

### Brief Description of the Drawings:

Embodiments of the invention are described in more details hereinafter with reference to the drawings, in which:
FIG. 1 is a perspective view of a portable range hood according to one embodiment of the present invention.
FIG. 2 is a perspective view of the portable range hood according to one embodiment of the present invention from another view angle.
FIG. 3 is a right view of the portable range hood according to one embodiment of the present invention.
FIG. 4 is an exploded view of the portable range hood according to one embodiment of the present invention.
FIG. 5 is an exploded view of a portable range hood according to another embodiment of the present invention.
FIG. 6 is an exploded view of the portable range hood according to another embodiment of the present invention from another view angle.
FIG. 7 is a schematic diagram illustrating when the second filtration device of the portable range hood is not installed to the main body according to further embodiment of the present invention.
FIG. 8 is an exploded view of the portable range hood according to further embodiment of the present invention.
FIG. 9 is an exploded view of the portable range hood according to further embodiment of the present invention from another view angle.
FIG. 10 is an exploded view of a second filtration device in the portable range hood according to further embodiment of the present invention.
FIG. 11 is a schematic diagram illustrating installation of the second filtration device in the portable range hood according to further embodiment of the present invention.
FIG. 12 is a schematic diagram illustrating installation of the filter mounting sleeve and the main body in the portable range hood according to further embodiment of the present invention.

### Detailed Description:

The present invention provides a portable range hood. To make the objectives, technical solutions, and advantageous effects of the present invention clearer, the invention is further described in detail below. It should be understood that the specific embodiments described herein are provided for explanatory purposes only and are not intended to limit the scope of the present invention.

It should be noted that the orientation or positional relationships indicated by terms such as "center," "up," "down," "left," "right," "inside," "outside," "vertical," and "horizontal" are based on the orientation or positional relationships shown in the accompanying drawings. These terms are used solely for convenience of description and simplification of explanation, and are not intended to indicate or imply that the referenced structures must be arranged in a particular orientation or constructed in a particular manner. Such terms should not be construed as limiting the present invention.

Furthermore, unless otherwise specified, the articles "a" or "the" may refer to both the singular and the plural. If the embodiments of the present invention refer to "first," "second," and the like, such designations are used solely for descriptive purposes and should not be understood as indicating relative importance or implying any limitation on the number of features. Thus, features identified as "first" or "second" may each include one or more of the corresponding features. In addition, the technical solutions described in different embodiments may be combined with one another, provided such combinations can be realized by those skilled in the art. However, when the combination of certain technical solutions is contradictory or impracticable, it shall be deemed that such combination does not exist and does not fall within the scope of protection of the present invention.

Portable range hoods are suitable for a wide range of use scenarios. Due to their portability, users can conveniently operate them during outdoor camping, barbecuing, and other activities to filter oil fume and reduce environmental pollution. However, the concentration of oil fume varies across different scenarios. When only a fixed filtration device is employed, it is difficult to balance airflow throughput and purification efficiency. In light-smoke conditions, oil fume cannot be treated rapidly, while in heavy-smoke conditions, incomplete purification often occurs. In addition, a fixed filter structure requires complicated replacement operations, during which users may easily soil their hands, and the process lacks cleanliness and convenience.

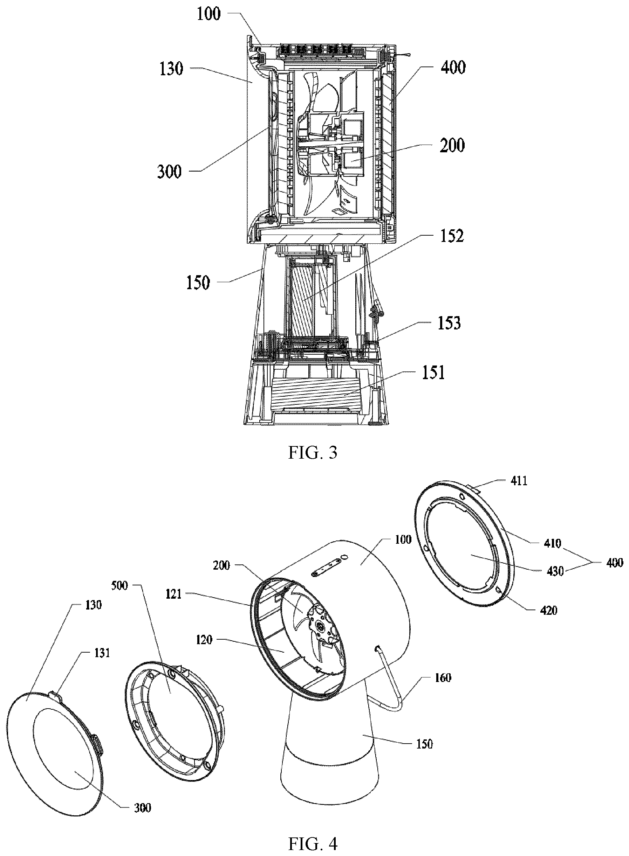

To solve the foregoing problem, the present invention provides a portable range hood, as illustrated in FIGS. 4, 5, and 8. The portable range hood comprises a master body 100, a fan assembly 200 disposed inside the master body 100, a first filtration device 300 arranged at one side of the body, and a second filtration device 400 arranged at another side of the body. The master body 100 forms a hollow barrel structure with openings at both ends, defining a fume channel 120. One end of the master body 100 forms an air inlet 121, while the other end forms an air outlet 122 provided with a first connection device 110. The first connection device 110 cooperates with a second connection device 420 provided on the second filtration device 400 to achieve a detachable connection between the second filtration device 400 and the master body 100. In one embodiment, the first connection device 110 is an iron plate, and the second connection device 420 is a magnet, enabling detachable connection through magnetic force. By employing the second filtration device 400 that can be easily installed and removed relative to the master body 100, the user can adjust both airflow and oil fume filtration capacity by selectively attaching or detaching the second filtration device 400. The assembly and disassembly process is simple and rapid, avoids contamination of the user's hands, and enhances commercial applicability.

Specifically, the master body 100 comprises a front cover 130 positioned at the air inlet 121, a grid 140 positioned at the air outlet 122, and a support 150 arranged at the bottom. The support portion 150 secures stable placement of the portable range hood, while the fan assembly 200 is accommodated within the fume channel 120 between the front cover 130 and the grid 140. When the fan assembly 200 is activated, the fan assembly 200 is configured to direct the airflow to be drawn through the front cover 130 at the air inlet 121, and then discharged through the grid 140 after passing through the fume channel 120.

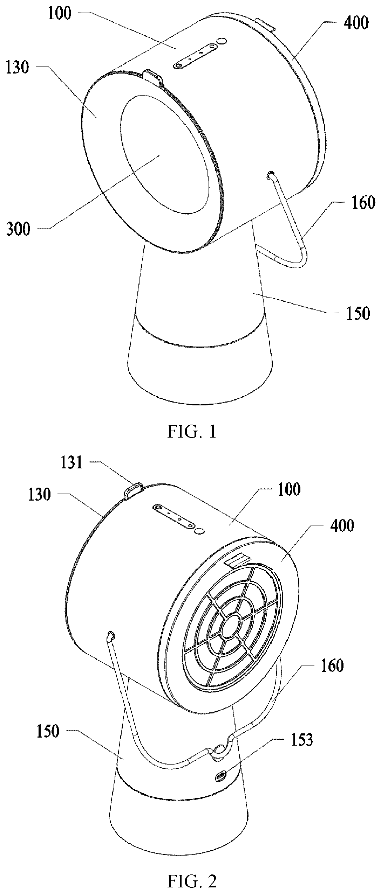

Optionally, as shown in FIG. 3, the support portion 150 may include a counterweight block 151, which enhances stability and enables reliable placement of the portable range hood under various conditions. Optionally, as shown in FIGS. 2 and 3, the support portion 150 may also be provided with a battery compartment 152 and a power socket 153 to facilitate the user to use the portable range hood in the scene with or without an external power supply. Optionally, as shown in FIGS. 1 and 2, a carrying handle 160 is pivotally mounted on the master body 100, and the carrying handle 160 is rotatable around the master body 100, providing a user-friendly structure for transport and thereby making the portable range hood to be more convenient and easier to use.

Further, as shown in FIGS. 1 and 3, the first filtration device 300 is snapped and held at a central position of the front cover 130. The front cover 130 is detachably snapped to the master body 100, thereby allowing the user to remove the front cover 130 from the master body 100 for cleaning or replacement of the first filtration device 300. Furthermore, the front cover 130 is provided with a wrench 131 to facilitate installation and removal of the front cover 130. Furthermore, after the first filtration device 300 is snapped and held at the central position of the front cover 130, the first filtration device 300 is arranged perpendicular to the airflow path within the fume channel 120, ensuring that all incoming oil fume pass through the first filtration device 300. Optionally, the first filtration device 300 may be implemented as a filter screen formed of activated carbon, stainless-steel mesh, or other suitable materials, to enable rapid adsorption of particles and droplets in the oil fume without affecting the airflow passage rate.

In one embodiment, as shown in FIG. 4, the portable range hood further includes a third filtration device 500, and the third filtration device 500 is snapped between the first filtration device 300 and the fan assembly 200, and arranged to be perpendicular to the airflow path, so as to further purify the oil fume passing through the first filtration device 300 to improve the purification effect on the oil fume. Since the third filtration device 500 is snapped between the first filtration device 300 and the fan assembly 200, the third filtration device 500 may be easily and quickly taken out for cleaning or replacement after removing the front cover 130, the operation is simple and clean, without contaminating the user's hands. Further, for the scenario of light fume, only the first filtration device 300 may be retained in front of the fan assembly 200 to avoid overly dispersing the airflow that passes through the fume channel 120, so that the oil fume can pass through the second filtration device 400 more intensively after passing through the fan assembly 200, so as to achieve more efficient filtration and purification of the oil fume; For the scenario of heavy oil fume, the third filtration device 500 may be installed to increase the purification effect of oil fume, and reduce the burden of the first filtration device 300 and the second filtration device 400, and extend the service life of the first filtration device 300 and the second filtration device 400. Optionally, the third filtration device 500 is a filter screen formed by activated carbon filter, stainless-steel filter or other materials, and the third filtration device 500 can use a different filter structure from the first filtration device 300 to adsorb pollutants of different sizes and forms in the oil fume. Furthermore, in the case of light oil fume, only the first filtration device 300 may be retained in front of the fan assembly 200 so as to minimize impact on the airflow and prevent overly dispersion of the airflow within the fume channel 120. In this manner, the oil fume are directed more intensively through the second filtration device 400 after passing the fan assembly 200, thereby achieving improved filtration and purification efficiency. In the case of heavy oil fume, the third filtration device 500 may be installed to enhance the purification effect, reduce workload on the first filtration device 300 and the second filtration device 400, such that their respective service lives can be extended. Optionally, the third filtration device 500 may be a filter screen formed of activated carbon, stainless-steel, or other suitable materials. The third filtration device 500 may further adopt a filter structure different from that of the first filtration device 300 to adsorb pollutants of different sizes and forms in the oil fume.

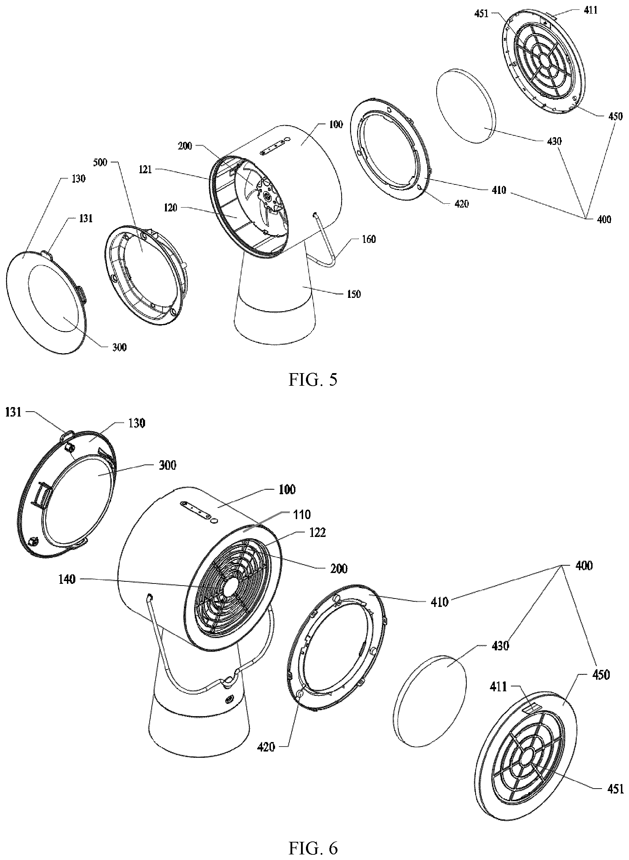

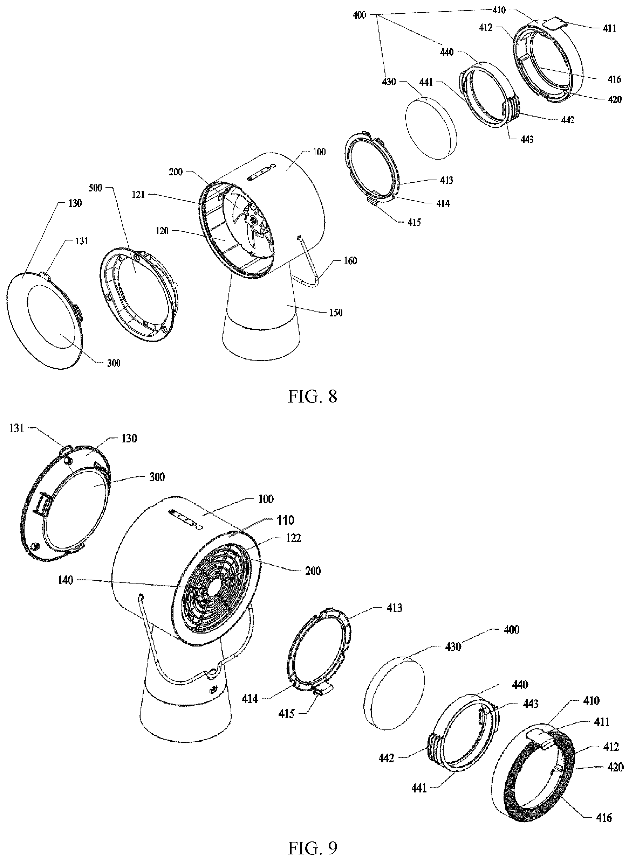

Further, as shown in FIG. 6 and FIG. 9, the second filtration device 400 is arranged at the air outlet 122 and facing to the grid 140, and the second filtration device 400 is perpendicular to the airflow path of the oil fume through the oil fume channel 120, such that the oil fume discharged from the air outlet 122 are compelled to pass through the second filtration device 400 before being discharged from the portable range hood.

In one embodiment, as shown in FIG. 4, the second filtration device 400 comprises a main body 410 and a filter 430. The main body 410 has a ring-shaped structure, and the filter 430 is snapped into the central portion of the main body 410 in a manner perpendicular to the longitudinal axis of the main body 410, such that a filtering plane of the filter 430 is oriented perpendicular to the airflow path when the second filtration device 400 is connected to the master body 100. The main body 410 is further provided with a second connection device 420 on a side facing towards the master body 100, the second connection device 420 is configured to cooperate with a first connection device 110 on the master body 100 to facilitate assembly and disassembly of the second filtration device 400 and the master body 100. A gripping handle 411 is provided at an opposite side of the main body 410 distal from the master body 100 to facilitate installation and removal of the second filtration device 400 by the user. Optionally, the second connection device 420 may be a magnet, the first connection device 110 may be an iron plate, and the detachable connection between the second filtration device 400 and the master body 100 may be achieved by magnetic attraction. In this way, the user can conveniently install or remove the second filtration device 400, thereby adjusting the filtration and purification effect of the portable range hood on the oil fumes depending on different usage scenarios.

Specifically, the filter 430 may be formed of an activated carbon filter screen, a stainless-steel filter screen, or a filter screen made of other suitable materials. The filter 430 may adopt a filtration structure different from that of the first filtration device 300 and the third filtration device 500 to adsorb pollutants of different sizes and forms in the oil fume. Moreover, by adjusting parameters such as the material, thickness, surface area, density, and/or porosity of the filter 430, the filter 430 can provide stronger filtration and purification capacity than the first filtration device 300 and the third filtration device 500 so that the purification capability of the portable range hood for oil fumes can be enhanced by installing the second filtration device 400 while it is convenient for the user to install or remove the second filtration device 400 to adjust the filtration and purification effect as needed. Optionally, the filter 430 may be a plasma filter.

In another embodiment, as shown in FIG. 5 and FIG. 6, the second filtration device 400 comprises a body 410, a filter cover 450 and a filter 430, wherein the filter cover 450 is connected to the body 410 in a snap-hold manner, so as to secure the filter 430 inside the second filtration device 400 in a snap-hold manner. Furthermore, the filter cover 450 is arranged on a side of the main body 410 distal from the master body 100, and the gripping handle 411 is arranged on the filter cover 450, so that after the filter cover 450 is snapped fit to the body 410, the user can quickly perform installation of the second filtration device 400 to the master body 100 or remove it from the master body 100 through the gripping handle 411.

Specifically, as shown in FIG. 5, the main body 410 is arranged with a second connection device 420 at the side facing towards the master body 100, and the second filtration device 400 and the master body 100 are disassembled and assembled through cooperation between the second connection device 420 and the first connection device 110 arranged on the master body 100. Optionally, the second connection device 420 is a magnet, the first connection device 110 is an iron plate, and the detachable connection between the second filtration device 400 and the master body 100 is achieved through magnetic attraction, so as to facilitate the user to install or remove the second filtration device 400 to adjust the filtration and purification effect of the portable range hood on the oil fume for different scenarios.

Furthermore, as shown in FIG. 6, the main body 410 has a ring-shaped structure, and is positioned in line with the grid 140 at the air outlet 122 of the master body 100, such that the oil fume passing through the fume channel 120 and discharged from the air outlet 122 are entirely directed into the second filtration device 400 through the main body 410. Furthermore, the filter cover 450 includes a portion facing towards the filter 430 and being hollowed out to form a filter grid 451 to enable a final adsorption of the oil fume passing through the filter 430, and enhance the filtration and purification effect of the second filtration device 400 on the oil fume. Specifically, the mesh density of the filter grid 451 is smaller than that of the grid 140 at the air outlet 122, so as to ensure that the purified oil fume can be discharged smoothly from the second filtration device 400.

Specifically, the filter 430 may be formed of an activated carbon filter screen, a stainless-steel filter screen, or a filter screen made of other suitable materials. The filter 430 may adopt a filtration structure different from that of the first filtration device 300 and the third filtration device 500 to adsorb pollutants of different sizes and forms in the oil fume. Moreover, by adjusting parameters such as the material, thickness, surface area, density, and/or porosity of the filter 430, the filter 430 can provide stronger filtration and purification capacity than the first filtration device 300 and the third filtration device 500 so that the purification capability of the portable range hood for oil fumes can be enhanced by installing the second filtration device 400 while it is convenient for the user to install or remove the second filtration device 400 to adjust the filtration and purification effect as needed. Optionally, the filter 430 may be a plasma filter.

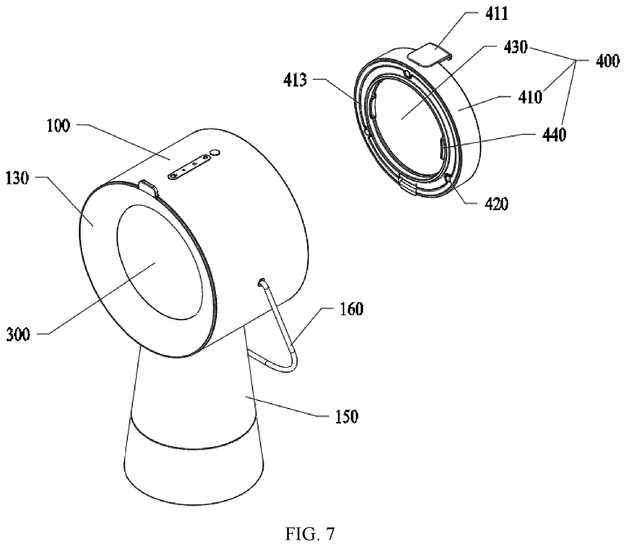

In another embodiment, as shown in FIG. 7, FIG. 8 and FIG. 9, the second filtration device 400 comprises a main body 410, a filter 430 and a filter mounting sleeve 440. Wherein the main body 410 and the filter mounting sleeve 440 both have ring-shaped structures, and the outer diameter of the filter mounting sleeve 440 is adapted to the inner diameter of the main body 410, so as to facilitate the filter mounting sleeve 440 to be fixed to the main body 410 in a snap-hold manner. Further, the filter mounting sleeve 440 is configured to accommodate the filter 430. When the filter mounting sleeve 440 is secured within the main body 410, the filtration plane of the filter 430 is oriented perpendicular to the longitudinal axis of the fume channel 120. In this way, when the second filtration device 400 is in connection with the master body 100, all oil fume discharged from the air outlet 122 are directed into the second filtration device 400 and pass through the filter 430, thereby achieving further filtration and purification of oil fume.

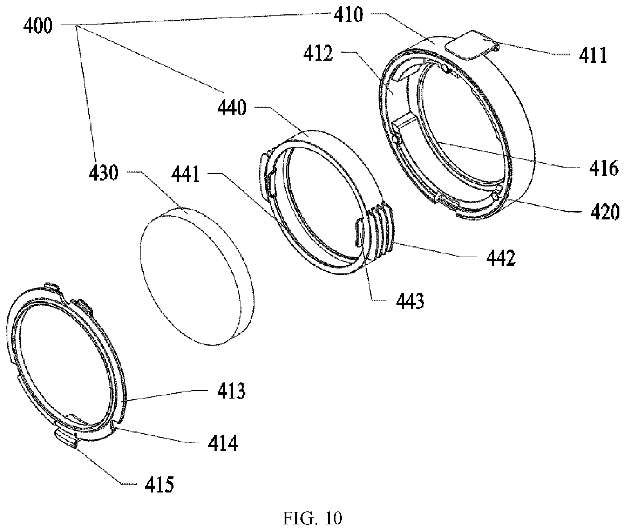

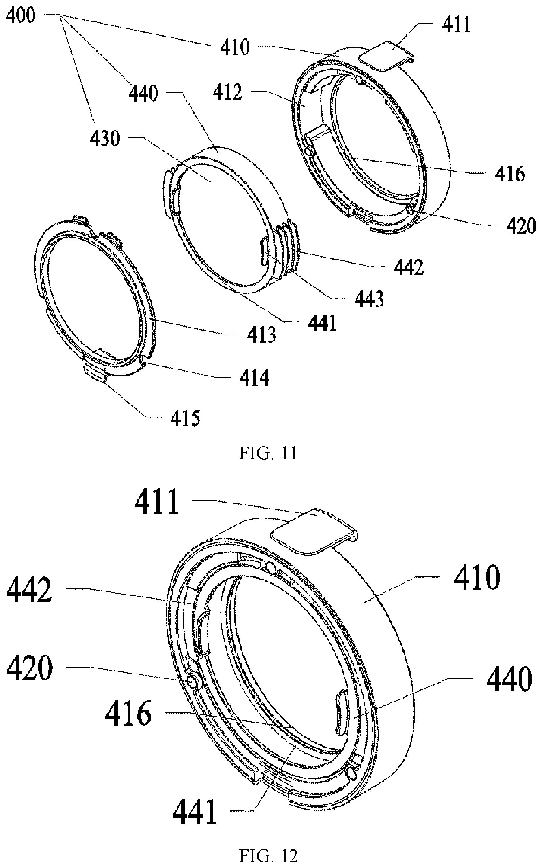

Specifically, as shown in FIG. 10 and FIG. 11, two ends of the filter mounting sleeve 440 extend radially towards the center of the filter mounting sleeve 440 such that a ring-shaped snapping protrusion 441 is formed at each end of the filter mounting sleeve 440. The filter mounting sleeve 440 is configured to accommodate the filter 430 in the central position through the snapping protrusions 441 to maintain a specific orientation of the filter 430. Optionally, the filter mounting sleeve 440 is made of a flexible silicone sleeve allowing the filter 430 to be easily snapped fit between the two rings of snapping protrusions 441, and taken out from the filter mounting sleeve 440, so as to facilitate cleaning and replacement of the filter 430 by the user.

Specifically, the filter 430 may be formed of an activated carbon filter screen, a stainless-steel filter screen, or a filter screen made of other suitable materials. The filter 430 may adopt a filtration structure different from that of the first filtration device 300 and the third filtration device 500 to adsorb pollutants of different sizes and forms in the oil fume. Moreover, by adjusting parameters such as the material, thickness, surface area, density, and/or porosity of the filter 430, the filter 430 can provide stronger filtration and purification capacity than the first filtration device 300 and the third filtration device 500 so that the purification capability of the portable range hood for oil fumes can be enhanced by installing the second filtration device 400 while it is convenient for the user to install or remove the second filtration device 400 to adjust the filtration and purification effect as needed. Optionally, the filter 430 may be a plasma filter.

Further, as shown in FIG. 10 and FIG. 11, on an outer wall of the filter mounting sleeve 440, one or more snap-holding members 442 are formed and extending outward radially, so that the outer diameter of the filter mounting sleeve 440 is increased at the snap-holding members 442 to facilitate fixing of the filter mounting sleeve 440 to the main body 410 in a snap-hold manner. Furthermore, the filter mounting sleeve 440 is configured to extend along the axial direction to form pulling handles 443 to facilitate the user to remove the filter mounting sleeve 440 from the main body 410, and make the disassembly and assembly of the second filtration device 400 more convenient and easily.

Specifically, as shown in FIG. 11 and FIG. 12, one or more snapping slots 412 are provided on an interior wall of the main body 410 for engaging with the snap-holding member 442 of the filter mounting sleeve 440, such that inner diameter of the main body 410 at the snapping slots 412 matches with outer diameter of the filter mounting sleeve 440 at the snap-holding member 442, and the filter mounting sleeve 440 being snapped fit to the central position of the main body 410 is achieved through insertion of the snap-holding members 442 into the snapping slots 412.

Furthermore, as shown in FIG. 8, the main body 410 is provided with a second connection device 420 on a side facing towards the master body 100, the second connection device 420 is configured to cooperate with a first connection device 110 on the master body 100 to facilitate assembly and disassembly of the second filtration device 400 and the master body 100. A gripping handle 411 is provided at an opposite side of the main body 410 distal from the master body 100 to facilitate installation and removal of the second filtration device 400 by the user. Optionally, the second connection device 420 may be a magnet, the first connection device 110 may be an iron plate, and the detachable connection between the second filtration device 400 and the master body 100 may be achieved by magnetic attraction. In this way, the user can conveniently install or remove the second filtration device 400, thereby adjusting the filtration and purification effect of the portable range hood on the oil fumes depending on different usage scenarios.

Further, as shown in FIG. 7 and FIG. 11, the main body 410 is configured to secure the filter mounting sleeve 440 in the central position of the main body 410 through a snapping cover 413 and a baffle 416, wherein the snapping cover 413 is detachably connected with the main body 410 through a buckle 415, and the baffle 416 is a ring-shaped protrusion formed by extending radially toward the central position of the main body 410 at one side of the main body 410. Through engagement of the snapping cover 413 and the baffle 416, the filter 430 is fixed in the central position of the second filtration device 400 and a filtering plane of the filter 430 is oriented perpendicular to the air flow path of the oil fume in the fume channel 120. In this way, when the second filtration device 400 is in connection with the master body 100, all oil fume discharged from the air outlet 122 are directed into the second filtration device 400 and pass through the filter 430, thereby achieving further filtration and purification of oil fume

Optionally, by changing the relative position relationship between the snapping cover 413 and the baffle 416 on the main body 410, the mounting manner of the filter mounting sleeve 440 relative to the main body 410 can be adjusted. When the baffle plate 416 is formed as a ring-shaped protrusion on the side of the main body 410 away from the master body 100, the snapping cover 413 is correspondingly arranged on the side of the main body 410 facing the master body 100. In this case, a clearance portion 414 is provided at the position of the snap cover 413 corresponding to the second connection device 420 to allow the second connection device 420 to reach out and engage with the first connection device 110 to achieve the detachable connection between the second filtration device 400 and the master body 100. At the same time, under this arrangement, the filter mounting sleeve 440 must be disassembled and assembled from the side of main body 410 facing the master body 100, that is, the second filtration device 400 must be removed from the master body 100 before the filter mounting sleeve 440 and the filter 430 being disassembled. Such configuration provides more stable placement of the filter 430 within the second filtration device 400. In another configuration, the baffle 416 may be formed as a ring-shaped protrusion extending from the side the main body 410 facing the master body 100, and the snapping cover 413 is correspondingly arranged on the side of the main body 410 away from the master body 100. In this case, the filter mounting sleeve 440 may be disassembled and assembled from the side of the main body 410 away from the master body 100. Under this arrangement, the filter mounting sleeve 440 may be taken out from the main body 410 to facilitate the user to clean or replace the filter 430 after the snapping cover 413 is detached from the main body 410, making the operation more convenient.

The present invention improves the filtering structure of a portable range hood by providing a second filtration device detachably connected to the body. User can disassemble and assemble the second filtration device as needed to adjust the filtration capacity of the portable range hood according to cooking conditions or kitchen environments in a timely manner. Such adjustment of the filtration capacity can be realized without turning off the portable range hood, and making the operation more convenient and easy. Moreover, the second filtration device can be installed and uninstalled as a whole, without requiring the user to directly touch the filter that has adsorbed fume particles. This allows the filter to be replaced quickly and cleanly, avoiding contamination of the user's hands by oil, and providing a more convenient and comfortable user experience.

In summary, the present invention discloses a portable range hood comprising a master body having a barrel structure with openings at both ends, one opening forming an air inlet of the portable range hood, and the other opening forming an air outlet of the portable range hood, wherein a first connection device is provided at the air outlet; a fan assembly arranged inside the master body and configured to draw oil fume from outside of the portable range hood through the air inlet and discharge the oil fume through the air outlet; a first filtration device fixed at the air inlet; and a second filtration device arranged at the air outlet, the second filtration device is provided with a second connection device on a side of the second filtration device facing the master body, and the second connection device is engaged with the first connection device to achieve detachable connection between the second filtration device and the master body. The detachable second filtration device allows users to flexibly adjust filtration and purification capacity and permits quick replacement without hand contact with oily filters, thereby making the portable range hood simple, convenient, and comfortable to use.

It should be understood that the implementation of the present invention is not limited to the above embodiments. For those of ordinary skill in the art, modifications or variations may be made based on the foregoing description, and all such modifications and variations shall fall within the scope of protection defined by the appended claims of the present invention.

## Claims

1. A portable range hood, **characterized in** comprising:
a master body having a barrel structure with openings at both ends, one opening forming an air inlet of the portable range hood, and the other opening forming an air outlet of the portable range hood, wherein a first connection device is provided at the air outlet;
a fan assembly arranged inside the master body and configured to draw oil fume from outside of the portable range hood through the air inlet and discharge the oil fume through the air outlet;
a first filtration device fixed at the air inlet; and
a second filtration device arranged at the air outlet, the second filtration device is provided with a second connection device on a side of the second filtration device facing the master body, and the second connection device is engaged with the first connection device to achieve detachable connection between the second filtration device and the master body.

2. The portable range hood of claim 1, wherein the second filtration device comprises:
a main body having a ring-shaped structure, and the second connection device being arranged at a side of the main body facing the master body; and
a filter detachably arranged in a central position of the main body.

3. The portable range hood of claim 2, wherein the second filtration device further comprises:
a filter mounting sleeve having a ring-shaped structure and having a pair of ring-shaped snapping protrusions positioned at opposite ends of the filter mounting sleeve, each of the ring-shaped snapping protrusions extending radially towards center of the filter mounting sleeve for securing the filter inside the filter mounting sleeve; and
wherein outer diameter of the filter mounting sleeve matches with inner diameter of the main body to allow the filter mounting sleeve to be accommodated inside the main body.

4. The portable range hood of claim 3, wherein the filter mounting sleeve further comprises snap-holding members extending outward radially from an outside surface of the filter mounting sleeve to achieve a snap-hold connection between the filter mounting sleeve and the main body.

5. The portable range hood of claim 3, wherein the filter mounting sleeve further comprises pulling handles extending along an axial direction and configured to facilitate installation/uninstallation of the filter mounting sleeve to/from the main body.

6. The portable range hood of claim 4, wherein the main body comprises:
a griping handle arranged on a side of the main body away from the body to facilitate installation/uninstallation of the second filtration device to/from the main body;
snapping slots configured to engaged with the snap-holding members of the filter mounting sleeve to achieve snap-hold connection between the filter mounting sleeve and the main body;
a snapping cover arranged on one side of the main body and connected with the main body in a snap-hold manner; and
a baffle arranged on another side of the main body opposite to the snapping cover and configured to cooperate with the snapping cover to accommodate the filter mounting sleeve inside the main body.

7. The portable range hood of claim 6, wherein the snapping cover is further provided with a clearance portion to allow the second connection device to reach out and cooperate with the first connection device to achieve detachable connection between the second filtration device and the body when the snapping cover is arranged at the side of the main body facing the master body.

8. The portable range hood of claim 2, wherein the second filtration device further comprises:
a filter cover configured to engage with the main body to fix the filter in a central position of the main body and provided with a filter grid facing the filter to allow oil fume to pass through, and mesh density of the filter grid being smaller than mesh density of a grid at the air outlet of the master body.

9. The portable range hood of claim 1, wherein the portable range hood further comprises:
a third filtration device detachably arranged between the first filtration device and the fan assembly.

10. The portable range hood of claim 1, wherein the second connection device is a magnet and the first connection device is an iron plate, and the detachable connection between the second filtration device and the body is achieved by magnetic attraction.
